## Europäisches Patentamt
## European Patent Office
## Office européen des brevets

(19)

(11) Numéro de publication: **0 154 584**
**B1**

# FASCICULE DE BREVET EUROPÉEN

(12)

(45) Date de publication du fascicule du brevet:
**03.02.88**

(51) Int. Cl.⁴: **F 16 D 25/12**, F 16 D 13/75

(21) Numéro de dépôt: **85400308.4**

(22) Date de dépôt: **20.02.85**

(54) **Dispositif de rattrapage automatique de jeu pour embrayage.**

(30) Priorité: **29.02.84 FR 8403107**

(43) Date de publication de la demande:
**11.09.85 Bulletin 85/37**

(45) Mention de la délivrance du brevet:
**03.02.88 Bulletin 88/5**

(84) Etats contractants désignés:
**DE GB IT**

(56) Documents cité:
**FR-A-2 244 939**
**FR-A-2 324 940**
**US-A-2 160 752**
**US-A-2 981 381**

(73) Titulaire: **BENDIX France, 126, rue de Stalingrad, F-93700 Drancy (FR)**

(72) Inventeur: **Pressaco, Pierre, 45, rue Emile Zola Bâtiment C, F-93120 La Courneuve (FR)**
Inventeur: **Carre, Jean-Jacques, 59, Boulevard de l'Est, F-93340 Le Raincy (FR)**

(74) Mandataire: **Timoney, Ian Charles Craig, Division Technique Service Brevets Bendix Europe 126, rue de Stalingrad, F-93700 Drancy (FR)**

LIBER, STOCKHOLM 1988

## Description

L'invention se rapporte à un dispositif de rattrapage automatique de jeu pour mécanisme de commande d'embrayage.

Un tel dispositif est décrit dans le document US-A-2 981 381 et comprend une tige d'actionnement disposée entre un bras de manoeuvre de l'embrayage et un organe de commande, cet organe étant susceptible de faire se déplacer sensiblement en translation longitudinale ladite tige par action sur un écrou monté sur une portion filetée de la tige et doté d'une couronne dentée avec laquelle peut coopérer un cliquet actionné à chaque déplacement de la tige et susceptible de faire tourner pas à pas l'écrou sur la tige.

L'invention a pour but de créer un dispositif de ce genre qui offre une structure simple et soit facilement adaptable à des mécanismes de commande d'embrayage existants.

A cet effet, le dispositif selon l'invention, conçu sous la forme d'un ensemble entièrement porté par la tige d'actionnement, comprend un premier ressort prenant appui en un endroit de la tige et exerçant une action sur le cliquet qui tend à amener celui-ci en une position de travail, cette action étant transmise au cliquet par une pièce intermédiaire qui se trouve arrêtée par une butée fixe sur une position intiale de la course de la tige à partir de sa position de repos, inhibant alors l'action dudit ressort sur le cliquet, le dispositif comprenant, en outre, entre le cliquet et la pièce intermédiaire, laquelle est constituée par une pièce orientée transversalement par rapport à l'axe de la tige d'actionnement, mobile le long de celle-ci et sollicitée par le premier ressort suivant la direction dudit axe, est disposé un levier palpeur de commande du cliquet qui, s'appuyant contre l'écrou en un endroit de la face transversale que celui-ci présente du côté de la pièce intermédiaire, peut basculer autour d'un axe d'articulation orienté transversalement et maintenu à une distance sensiblement constante de la pièce intermédiaire, entre une position où il amène le cliquet à prendre sa position de travail et une position où il laisse celui-ci revenir en une position de repos sous l'action de ladite autre force élastique, le levier de commande du cliquet étant articulé suivant son axe de basculement à la paroi transversale que comporte une boîtier enveloppant l'écrou et pouvant se déplacer sur la tige d'actionnement, et ledit levier comportant une première partie comprise dans l'intervalle de largeur (i) variable séparant ladite face transversale de l'écrou et ladite paroi transversale du boîtier, cette paroi étant appliquée contre la pièce intermédiaire par un second ressort moins fort que le premier ressort.

On voit que dans un dispositif selon l'invention le déclenchement des opérations de rattrapage de jeu et l'énergie nécessaire pour faire tourner en conséquence l'écrou de réglage sont dérivés du seul mouvement longitudinal de la tige d'actionnement par rapport à une butée fixe. Il est par suite aisé d'équiper d'un tel dispositif un mécanisme existant, en remplaçant sa tige d'actionnement simple par une tige d'actionnement équipée conformément à l'invention.

La force élastique ramenant le cliquet en une position de repos peut émaner du cliquet lui-même, constitué par une lame de ressort dont une extrémité est fixée au boîtier et qui entoure à distance la couronne dentée de l'écrou, se terminant par un bec en contact avec cette dernière et coopérant avec les dents qui la composent.

Selon une forme d'exécution particulièrement simple, le levier de commande du cliquet est un levier coudé en L dont l'une des branches constitue la première partie du levier comprise dans l'intervalle entre la face transversale de l'écrou et ladite paroi transversale du boîtier, et dont l'extrémité de l'autre branche repose sur la face interne de la lame de ressort constituant le cliquet soit en y exerçant une force radiale orientée de façon centrifuge par rapport à l'axe de la tige d'actionnement, forçant cette lame à se déformer, soit en laissant revenir élastiquement celle-ci dans une position de repos, son bec oscillant corrélativement suivant la direction circonférentielle de la couronne dentée entre sa position de travail et une position de repos déterminée par la position de repos que prend le levier de commande après que la pièce intermédiaire ait été arrêtée par la butée précitée.

De préférence, de la lame de ressort constituant le cliquet entoure la couronne dentée de l'ecrou sur plus d'un demi-tour et le point de contact du levier de commande avec la face interne de cette lame est situé à peu près à mi-chemin des extrémités de celle-ci.

Le premier ressort mentionné plus haut peut être constitué par un ressort de compression interposé entre l'organe intermédiaire et une pièce annulaire d'appui solidaire de la tige d'actionnement. Quant au second ressort, avantageusement constitué par une rondelle élastique ou rondelle Belleville montée coaxialement sur la tige d'actionnement, on peut prévoir qu'il prenne appui sur une pièce de poussée montée, avec possibilité de coulissement, sur la tige d'actionnement entre l'écrou et l'organe de commande. Cette pièce de poussée peut recevoir la forme d'une calotte sphérique pour coopérer avec un siège annulaire conjugué appartenant à l'organe de commande afin de permettre à la tige d'actionnement un certain débattement angulaire.

D'autres caractêristiques et avantages de l'invention ressortiront plus clairement de la description qui va suivre, en regard des dessins annexés, d'un exemple de réalisation non limitatif.

Les figures 1 et 2 représentent schématiquement, en coupe longitudinale, un mécanisme de commande d'embrayage équipé d'un dispositif selon l'invention, respectivement en position de repos et en position de débrayage.

Les figures 3 et 4 représentent des coupes transversales prises respectivement suivant les lignes III - III et IV - IV des figures précédentes.

Le mécanisme de commande d'embrayage représenté comprend un organe de commande 1 et une tige 2 d'actionnement d'un bras 3 de manoeuvre de l'embrayage commandé. A la tige d'actionnement 2 est associé un dispositif de réglage 4 qui assure un rattrapage automatique de jeu au fur et à mesure de l'usure des pièces de friction de l'embrayage commandé.

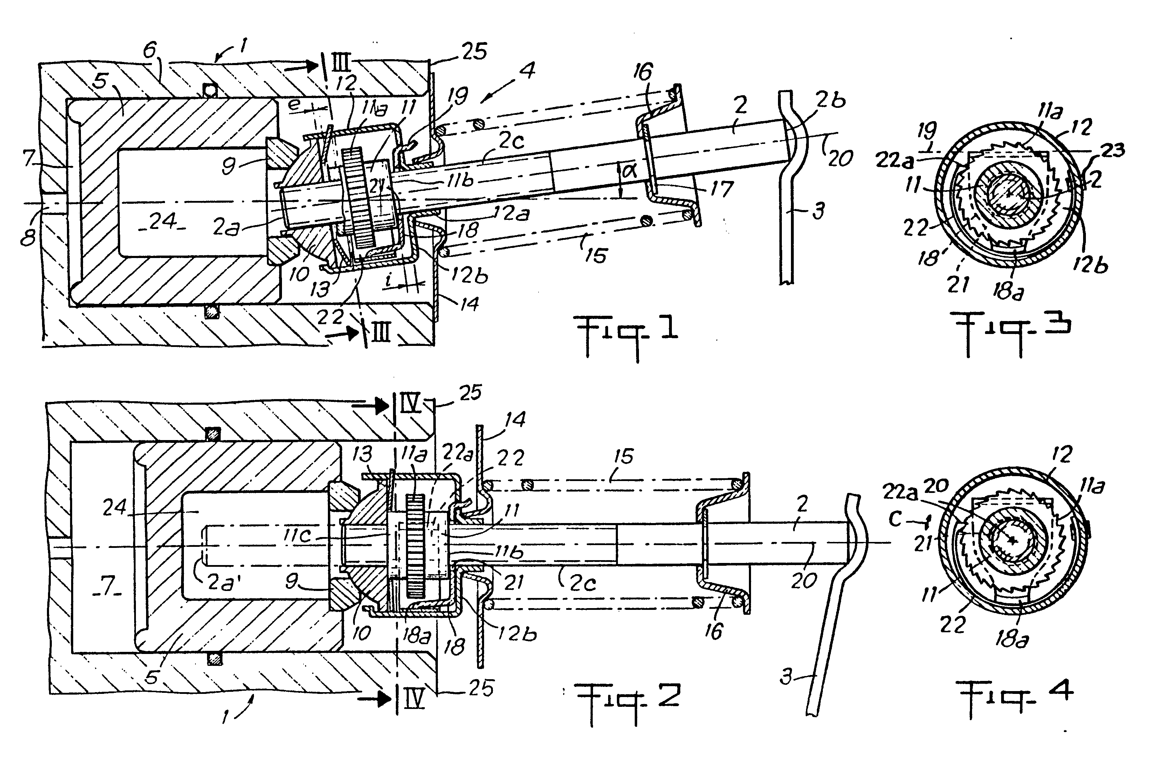

L'organe de commande 1 est un récepteur hydraulique composé d'un piston 5 déplaçable dans un cylindre 6 fixe sous l'action d'un liquide hydraulique admis dans une chambre interne 7 via une conduite d'alimentation 8. Le piston 5 porte un siège annulaire 9 coopérant avec une pièce 10 en forme de calotte sphérique montée sur l'extrémité 2a de la tige 2 opposée à son extrémité 2b par laquelle elle attaque le bras 3. La poussée du piston 5 lors d'une commande de débrayage (figure 2) se communique à la tige 2 d'actionnement dudit bras par l'intermédiaire du siège 9, de la pièce 10 et d'un écrou 11 engagé sur une partie filetée 2c de la tige 2. La présence des éléments 9, 10, formant articulation à rotule, permet à la tige 2 de prendre une certaine obliquité α variable pour accompagner le mouvement de pivotement du bras 3 durant sa course d'actionnement de celui-ci.

L'écrou 11 est enveloppé par un boîtier 12 en forme de cloche, pouvant coulisser le long de la tige 2 avec laquelle il est en contact par un manchon de guidage 12a. Ce boîtier est sollicité vers l'extrémité 2b de la tige 2 par un ressort 13, constitué par une rondelle Belleville prenant appui sur la pièce de poussée 10. Le déplacement correspondant du boîtier 12 est limité par sa venue en butée sur une pièce 14 montée transversalement à la manière d'un palonnier autour du manchon 12a dudit boîtier et sollicitée en sens inverse, c'est-à-dire vers l'extrémité 2a de la tige 2, par un ressort hélicoïdal 15 plus fort que le ressort 13, qui pour sa part prend appui sur une coupelle 16 enfilée sur la tige 2 et retenue par une rondelle d'arrêt 17.

L'écrou 11, de forme générale cylindrique, comporte sur sa surface latérale une couronne dentée 11a périphérique et est limité par deux faces transversales 11b, 11c situées dans des plans perpendiculaires à l'axe 20 de la tige 2. Dans l'intervalle entre la face 11b la plus éloignée de l'extrémité 2a de la tige et une paroi transversale 12b parallèle que comporte le boîtier 12 est logé un levier palpeur 18 dont l'orientation par rapport à l'axe 20 de la tige 2 varie en fonction de la largeur i dudit intervalle. Ce levier est en effet un levier coudé en L comportant une première partie rectiligne située dans l'intervalle précité, percée d'un trou 21 permettant le passage de la tige 2 et articulée par l'une de ses extrémités à la paroi transversale 12b du boîtier 12 suivant un axe 19 perpendiculaire à l'axe 20 et situé à distance de cet axe, tandis que son autre extrémité se raccorde à une deuxième partie faisant un angle voisin de 90° avec la première partie, dont l'extrémité 18a est en contact avec la face interne d'une lame de ressort 22 entourant la couronne dentée 11a de l'écrou 11 sur une plage angulaire comprise entre un demi-tour et un tour. A l'une de ses extrémités, la lame de ressort 22 est fixée par un rivet 23 à la paroi latérale du boîtier 12. Elle comporte à son autre extrémité un bec 22a qui s'appuie sur les dents de la couronne dentée 11a. Le point de contact de la partie 18a du levier 18 avec la lame de ressort 22 se trouve à peu près à mi-chemin des extrémités de celle-ci. Lorsque le levier 18 oscille autour de son axe d'articulation 19, son extrémité 18a exerce une force variable (de sens centrifuge par rapport à l'axe 20 de la tige 2) sui la lame 22, ce qui se traduit par une oscillation en direction circonférentielle de son bec 22a, la lame 22 constituant ainsi un cliquet coopérant avec la couronne dentée 11a de l'écrou 11 et susceptible de faire tourner pas à pas ce dernier, dont la position sur la tige 2 se modifie en conséquence.

Le paroi 12b du boîtier 12 et, partant, l'axe d'articulation 19 du levier 18 sont maintenus à une distance sensiblement constante de la partie périphérique plane de la pièce 14 par laquelle celle-ci peut prendre appui contre une butée fixe 25, cette distance étant déterminée pai une partie centrale de la pièce 14, offrant la forme d'une douille et constituant une entretoise vis-à-vis de la paroi 12b.

Au repos (figures 1 et 3), l'action du ressort 15 est contenue par la pièce 14, trouvant appui sur la butée 25, laquelle est constituée par le bord antérieur du cylindre 6 de l'organe de commande 1. Le ressort 13 peut donc agir librement sur le boîtier 12 pour écarter sa paroi 12b de la face 11b de l'écrou 11, faisant apparaître un intervalle de largeur i supérieure à l'épaisseur du levier 18. Celui-ci, dont la première partie se met en biais dans ledit intervalle sous l'effet de la force élastiqué de la lame 22, laisse ainsi cette dernière prendre une position de repos.

Lors d'une opération de débrayage, l'organe de commande 1 pousse (figure 2) la tige 2 d'actionnement du bras 3 de l'embrayage, par l'intermédiaire de son piston 5, des organes 9, 10 et de l'écrou 11, attaqué par sa face transversale antérieure 11c. La pièce 14 quitte la butée 25 et transmet la force du ressort 15 au boîtier 12 dont la paroi 12b se trouve pressée contre la face 11b de l'écrou 11. Du fait que sa première partie est alors serrée entre ces deux surfaces transversales, le levier 18 se redresse, son extrémité 18a appuyant sur la lame de ressort 22 de sorte que le bec 22a de celle-ci prend sa position de travail (figure 4).

Lorsque l'opération de débrayage est achevée, l'organe de commande 1 laisse l'ensemble revenir en position de repos (figure 1). Le pièce 14 rencontre la butée 25 et l'intervalle précité reprend une largeur i qui permet au levier palpeur 18 de basculer en laissant revenir au repos la lame de ressort 22 et son bec 22a, tandis que l'écrou 11 est libre de tourner, un petit jeu e apparaissant entre sa face transversale 11c et la pièce de poussée 10 sous l'action du ressort 13.

Le bec 22a de la lame 22 exécute ainsi un mouvement de va et vient par rapport à la couronne dentée 11a de l'écrou 11. Il est clair que l'amplitude c de ce mouvement est fonction de l'amplitude de variation de la largeur i de l'intervalle dans lequel bascule le levier 18, laquelle dépend de la position de repos que prend la tige 2 et, par suite, de l'usure de l'embrayage. Lorsque, avec l'augmentation du degré d'usure, la largeur i s'accroît, l'amplitude c atteint la valeur du pas des dents de la couronne 11a, et le bec 22a, ayant accroché la dent suivante, entraîne celle-ci lors du retour au repos de l'ensemble, faisant tourner en correspondance d'un pas l'écrou 11 dont le déplacement corrélatif sur la tige 2 compense l'usure de l'embrayage. Ce rattrapage automatique de jeu cause un déplacement progressif de la tige 2 par rapport à l'écrou 11 au cours de la vie de l'embrayage, son extrémité 2a venant finalement en 2a' à l'intérieur d'une cavité 24 creusée à cet effet dans le piston 5.

**Revendications**

1. Dispositif de rattrapage automatique de jeu pour mécanisme de commande d'embrayage, comprenant une tige (2) d'actionnement disposée entre un bras (3) de manoeuvre de l'embrayage et un organe de commande (1), cet organe étant susceptible de faire se déplacer sensiblement en translation longitudinale ladite tige par action sur un écrou (11) monté sur une portion filetée (2c)de la tige et doté d'une couronne dentée (11a) avec laquelle peut coopérer un cliquet (22) actionné à chaque déplacement de la tige et susceptible de faire tourner pas à pas l'écrou sur la tige, ce dispositif étant caractérisé par le fait qu'il constitue un ensemble entièrement porté par la tige d'actionnement (2) et que cet ensemble comprend un premier ressort (15) prenant appui en un endroit de la tige (2) et exerçant une action sur le cliquet (22) qui tend à amener celui-ci en une position de travail, cette action étant transmise au cliquet par une pièce intermédiaire (14) qui se trouve arrêtée par une butée fixe (25) sur une position initiale de la course de la tige (2) à partir de sa position se repos, inhibant alors l'action dudit ressort (15) sur le cliquet (22), le dispositif comprenant, en outre, entre le cliquet (22) et la pièce intermédiaire (14), laquelle est constituée par une pièce orientée transversalement par rapport à l'axe (20) de la tige d'actionnement (2), mobile le long de celle-ci et sollicitée par le premier ressort (15) suivant la direction dudit axe (20), est disposé un levier palpeur (18) de commande du cliquet (22) qui, s'appuyant contre l'écrou (11) en un endroit de la face transversale (11b) que celui-ci présente du côté de la pièce intermédiaire (14), peut basculer autour d'un axe d'articulation (19) orienté transversalement et maintenu à une distance sensiblement constante de la pièce intermédiaire (14), entre une position où il amène le cliquet (22) à prendre sa position de travail et une position où il laisse celui-ci revenir en une position de repos sous l'action de ladite autre force élastique, le levier (18) de commande du cliquet (22) étant articulé suivant son axe de basculement (19) à la paroi transversale (12b) que comporte un boîtier (12) enveloppant l'écrou (11) et pouvant se déplacer sur la tige d'actionnement (2), et ledit levier (18) comportant une première partie comprise dans l'intervalle de largeur (i) variable séparant ladite face transversale (11b) de l'écrou (11) et ladite paroi transversale (12b) du boîtier (12), cette paroi étant appliquée contre la pièce intermédiaire (14) par un second ressort (13) moins fort que le premier ressort (15).

2. Dispositif selon la revendication 1, caractérisé par le fait que la force élastique ramenant le cliquet (22) en une position de repos émane du cliquet lui-même, constitué par une lame de ressort dont une extrémité est fixée au boîtier (12) et qui entoure à distance la couronne dentée (11a) de l'écrou (11), se terminant par un bec (22a) en contact avec cette dernière et coopérant avec les dents qui la composent.

3. Dispositif selon la revendication 2, caractérisé par le fait que le levier (18) de commande de cliquet (22) est un levier coudé en L dont l'une des branches constitue la première partie comprise dans l'intervalle entre la face transversale (11b) de l'écrou (11) et la paroi transversale (12b) du boîtier (12), et dont l'extrémité (18a) de l'autre branche repose sur la face interne de la lame de ressort constituant le cliquet (22) soit en y exerçant une force radiale orientée de façon centrifuge par rapport à l'axe (20) de la tige d'actionnement (2), forçant cette lame à se déformer, soit en laissant revenir élastiquement celle-ci dans une position de repos, son bec (22a) oscillant corrélativement suivant la direction circonférentielle de la couronne dentée (11a) avec une amplitude (c) entre sa position de travail et une position de repos déterminée par la position de repos que prend le levier de commande (18) après que la pièce intermédiaire (14) a été arrêtée par la butée (23) précitée.

4. Dispositif selon la revendication 2 ou 3, caractérisé par le fait que la lame de ressort constituant le cliquet (22) entoure la couronne dentée (11a) de l'écrou (11) sur plus d'un demi-tour et que le point de contact du levier de commande (18) avec la face interne de cette lame est situé à peu près à mi-chemin des extrémités de celle-ci.

5. Dispositif selon l'une quelconque des revendications 1 à 4, caractérisé par le fait que le premier ressort (15) est un ressort de compression interposé entre l'organe intermédiaire (14) et une pièce annulaire d'appui (16) solidaire de la tige d'actionnement (2).

6. Dispositif selon l'une quelconque des revendications 1 à 5, caractérisé par le fait que le second ressort (13) prend appui sur une pièce de poussée (10) montée, avec possibilité de coulissement, sur la tige d'actionnement (2) entre l'écrou (11) et l'organe de commande (1).

7. Dispositif selon la revendication 6, caractérisé par le fait que la pièce de poussée (10) est en forme de calotte sphérique et coopère avec un siège annulaire (9) conjugué appartenant à l'organe de commande (1).

8. Dispositif selon la revendication 6 ou 7, caractérisé par le fait que le second ressort (13) est une rondelle Belleville montée coaxialement sur la tige d'actionnement (2).

**Patentansprüche**

1. Selbsttätige Nachstellvorrichtung für den Steuermechanismus einer Kupplung, mit einer Betätigungsstange (2), die zwischen einem Betätigungsarm (3) der Kupplung und einem Steuerglied (1) angeordnet ist, wobei dieses Steuerglied in der Lage ist, die Betätigungsstange im wesentlichen in Längsrichtung zu verschieben, und zwar durch Einwirken auf eine Mutter (11), die auf einem Gewindeabschnitt (2c) der Betätigungsstange angebracht und mit einem Zahnkranz (11a) versehen ist, mit welchem eine Klinke (22) zusammenwirkt, welche bei jeder Verschiebung der Betätigungsstange betätigt wird und in der Lage ist, die Mutter auf der Betätigungsstange schrittweise zu drehen, dadurch gekennzeichnet, daß die Nachstellvorrichtung von einer Baueinheit gebildet wird, die insgesamt von der Betätigungsstange (2) getragen wird, und daß diese Baueinheit eine erste Feder (15) aufweist, die an einer Stelle der Betätigungsstange (2) abgestützt ist und auf die Klinke (22) eine Wirkung ausübt, welche diese in eine Ruhestellung zu bewegen sucht, wobei diese Wirkung auf die Klinke durch ein Zwischenstück (14) übertragen wird, das von einem ortsfesten Anschlag (25) in eine Anfangsstellung der Bewegung der Betätigungsstange (2) ausgehend von ihrer Ruhestellung angehalten wird, um somit die von der Feder (15) auf die Klinke (22) ausgeübte Wirkung zu unterbinden, daß die Nachstellvorrichtung ferner einen Fühlhebel (18) zur Steuerung der Klinke (22) zwischen der Klinke (22) und dem Zwischenstück (14) aufweist, welches von einem Bauteil gebildet wird, das zur Achse (20) der Betätigungsstange (2) quer verläuft, entlang desselben beweglich ist und von der ersten Feder (15) in Richtung dieser Achse (20) vorgespannt wird, wobei der Fühlhebel, der gegen die Mutter (11) an einer Stelle deren Stirnfläche (11b) auf der Seite des Zwischenstücks (11) angedrückt wird, um eine Gelenkachse (19) schwenken kann, die in Querrichtung verläuft und in im wesentlichen konstantem Abstand zu dem Zwischenstück (14) gehalten wird, und zwar zwischen einer Stellung, in der er die Klinke (22) in ihrer Arbeitsstellung hält, und einer Stellung, in der er diese unter der Wirkung der anderen elastischen Kraft in ihre Ruhestellung zurückkehren läßt, wobei der Hebel (18) zur Steuerung der Klinke (22) um seine Schwenkachse (19) an der Querwand (12b) eines Gehäuses (12) angelenkt ist, das die Mutter (11) umgibt und auf der Betätigungsstange (2) verschiebbar ist, und der Hebel (18) einen ersten Abschnitt aufweist, der sich in dem Zwischenraum veränderlicher Breite (i) befindet, der die besagte Stirnseite (11b) der Mutter (11) und die Querwand (12b) des Gehäuses (12) trennt, wobei diese Wand gegen das Zwischenstück (14) durch eine zweite Feder (13) angedrückt wird, die weniger stark als die erste Feder (15) ist.

2. Vorrichtung nach Anspruch 1, dadurch gekennzeichnet, daß die elastische Kraft, die die Klinke (22) in ihre Ruhestellung drückt, von der Klinke selbst herrührt und von einem Federblatt gebildet wird, dessen ein Ende am Gehäuse (12) befestigt ist und das den Zahnkranz (11a) der Mutter (11) mit Abstand umgibt und in einem Ansatz (22a) endet, der mit dem letzteren in Berührung steht und mit den Zähnen desselben zusammenwirkt.

3. Vorrichtung nach Anspruch 2, dadurch gekennzeichnet, daß der Hebel (18) zur Steuerung der Klinke (22) ein Hebel in Form eines L ist, dessen ein Schenkel den ersten Abschnitt in dem Zwischenraum zwischen der Stirnseite (11b) der Mutter (11) und der Querwand (12b) des Gehäuses (12) bildet und dessen anderer Schenkel mit seinem Ende auf der Innenfläche des die Klinke (22) bildenden Federblattes ruht, wobei er auf dieses eine bezüglich der Achse (20) der Betätigungsstange (2) radial gerichtete Zentrifugalkraft ausübt, welche eine Verformung des Federblattes bewirkt, oder dieses in eine Ruhestellung elastisch zurückkehren läßt, wobei ihr Ansatz (22a) korrelativ in Umfangsrichtung des Zahnkranzes (11a) mit einer Amplitude (c) zwischen ihrer Arbeitsstellung und einer Ruhestellung schwenkt, die von der Ruhestellung festgelegt wird, welche der Steuerhebel (18) einnimmt, nachdem das Zwischenstück (14) von dem vorerwähnten Anschlag (23) angehalten worden ist.

4. Vorrichtung nach Anspruch 2 oder 3, dadurch gekennzeichnet, daß das die Klinke (22) bildende Federblatt den Zahnkranz (11a) der Mutter (11) auf mehr als einer halben Umdrehung umgibt und daß der Berührungspunkt des Steuerhebels (18) mit der Innenseite des Federblattes ungefähr auf der Hälfte zwischen den Enden desselben liegt.

5. Vorrichtung nach einem der Ansprüche 1 bis 4, dadurch gekennzeichnet, daß die erste Feder (15) eine Druckfeder ist, die zwischen dem Zwischenstück (14) und einem ringförmigen Anschlagteil (16) angeordnet ist, das an der Betätigungsstange (2) festgelegt ist.

6. Vorrichtung nach einem der Ansprüche 1 bis 5, dadurch gekennzeichnet, daß die zweite Feder (13) an einem Druckstück (10) abgestützt ist, das auf der Betätigungsstange (2) zwischen der Mutter (11) und dem Steuerglied (1) gleitend gelagert ist.

7. Vorrichtung nach Anspruch 6, dadurch gekennzeichnet, daß das Druckstück (10) die Form einer Kugelkalotte hat und mit einem dazu konformen ringförmigen Sitz (19), der zu dem Steuerglied (1) gehört, zusammenwirkt.

8. Vorrichtung nach Anspruch 6 oder 7, dadurch gekennzeichnet, daß die zweite Feder (13) eine Tellerfeder ist, die auf der Betätigungsstange (2) koaxial angebracht ist.


## Claims

1. Device for automatic recovery of play for a clutch control mechanism, incorporating an actuating rod (2) situated between an operating arm (3) of the clutch and a control component (1), this component being capable of causing the said rod to move essentially in longitudinal translation by acting upon a nut (11) mounted on a threaded portion (2c) of the rod provided with a toothed rim (11a) with which a pawl (22) can cooperate actuated at each movement of the rod and capable of causing the nut to turn step by step on the rod, this device being characterised in that it consists of an assembly carried entirely by the actuating rod (2) and in that this assembly incorporates a first spring (15) bearing against a point on the rod (2) and exerting an effect on the pawl (22) which tends to bring the latter into a working position, this effect being transmitted to the pawl through an intermediate component (14) which is stopped by a fixed abutment (25) on an initial position of the travel of the rod (2) starting from its rest position, inhibiting thereafter the effect of the said spring (15) on the pawl (22), the device including, in addition, between the pawl (22) and the intermediate component (14), which consists of a component orientated transversely relative to the axis (20) of the actuating rod (2), able to move along the latter and pushed by the first spring (15) along the direction of the said axis (20), a follower lever (18) is situated for controlling the pawl (22) which, bearing against the nut (11) at a point on the transverse surface (11b) of the latter on the side of the intermediate component (14), can hinge about an axis of articulation (19) orientated transversely and held at an essentially constant distance from the intermediate component (14), between a position in which it causes the pawl (22) to take up its working position and a position in which it allows the latter to return to a rest position under the effect of the said other elastic force, the lever (18) for controlling the pawl (22) being articulated along its axis of hinging (19) on the transverse wall (12b) incorporated in a casing (12) enclosing the nut (11) and able to move on the actuating rod (2), and the said lever (18) possesses a first portion located in the gap of variable width (i) separating the said transverse surface (11b) of the nut (11) from the said transverse wall (12b) of the casing (12), this wall being pushed against the intermediate component (14) by a second spring (13) which is less stiff than the first spring (15).

2. Device according to Claim 1, characterised in that the elastic force returning the pawl (22) to a rest position comes from the pawl itself, consisting of a spring leaf one end of which is fixed to the casing (12) and which surrounds at a distance the toothed rim (11a) of the nut (11), terminating in a nose (22a) which is in contact with the latter and cooperates with the teeth of which it is formed.

3. Device according to Claim 2, characterised in that the lever (18) for controlling the pawl (22) is an L-shaped lever of which one of the branches forms the first portion situated in the gap between the transverse surface (11b) of the nut (11) and the transverse wall (12b) of the casing (12), and of which the end (18a) of the other branch rests against the inner surface of the spring leaf forming the pawl (22) either exerting on it a radial force directed in a centrifugal manner relative to the axis (20) of the actuating rod (2), forcing this leaf to become deformed, or allowing the latter to return elastically to a rest position, its nose (22a) oscillating correlatively along the circumferential direction of the toothed rim (11a) with an amplitude (c) between its working position and a rest position determined by the rest position occupied by the control lever (18) after the intermediate component (14) has been stopped by the aforementioned abutment (23).

4. Device according to Claim 2 or Claim 3, characterised in that the spring leaf forming the pawl (22) surrounds the toothed rim (11a) of the nut (11) over more than a half turn and that the point of contact of the control lever (18) with the inner surface of this leaf is situated approximately half-way between the ends of the latter.

5. Device according to any one of Claims 1 to 4, characterised in that the first spring (15) is a compression spring interposed between the intermediate component (14) and an annular bearing component (16) firmly fixed to the actuating rod (2).

6. Device according to any one of Claims 1 to 5, characterised in that the second spring (13) bears against a thrust component (10) mounted, and capable of sliding, on the actuating rod (2) between the nut (11) and the control component (1).

7. Device according to Claim 6, characterised in that the thrust component (10) is in the shape of a spherical cap and cooperates with a matching annular seat (9) attached to the control component (1).

8. Device according to Claim 6 or Claim 7, characterised in that the second spring (13) is a Belleville washer mounted coaxially on the actuating rod (2).

Fig. 1

Fig. 2

Fig. 3

Fig. 4

0 154 584